# EUROPEAN PATENT SPECIFICATION

(11) **EP 1 707 409 B1**
(45) Date of publication and mention of the grant of the patent: **02.12.2009**
(21) Application number: 06003945.0
(22) Date of filing: 27.02.2006
(51) Int. Cl.: B60G 21/05, B60G 9/04, B60B 35/02

(54) **Torsion beam type rear suspension**
Hinterachse nach der Verbundlenker-Bauart
Essieu arrière du type à traverse déformable en torsion

(30) Priority: 31.03.2005 JP 2005104564; 31.03.2005 JP 2005104565; 31.03.2005 JP 2005104566; 31.03.2005 JP 2005104568
(43) Date of publication of application: 04.10.2006
(73) Proprietor: Mazda Motor Corporation, Aki-gun, Hiroshima 730-8670 (JP)
(72) Inventor: Kusaka, Yuki c/o Mazda Motor Corporation, Aki-gun, Hiroshima 730-8670 (JP); Harada, Kazuo c/o Mazda Motor Corporation, Aki-gun, Hiroshima 730-8670 (JP)
(74) Representative: Müller-Boré & Partner Patentanwälte

(56) References cited:
- EP-A- 0 552 537
- EP-A- 1 134 047
- DE-A1- 10 336 800
- FR-A- 2 793 736
- FR-A- 2 819 754
- FR-A- 2 861 647
- US-A- 4 432 564
- US-A- 4 750 757
- US-A- 5 813 691
- PATENT ABSTRACTS OF JAPAN vol. 006, no. 172 (M-154), 7 September 1982 (1982-09-07) & JP 57 084210 A (MAZDA MOTOR CORP), 26 May 1982 (1982-05-26)
- PATENT ABSTRACTS OF JAPAN vol. 2000, no. 20, 10 July 2001 (2001-07-10) & JP 2001 080329 A (HONDA MOTOR CO LTD), 27 March 2001 (2001-03-27)
- PATENT ABSTRACTS OF JAPAN vol. 2000, no. 08, 6 October 2000 (2000-10-06) -& JP 2000 142060 A (MAZDA MOTOR CORP), 23 May 2000 (2000-05-23)

## Description

### BACKGROUND OF THE INVENTION

### 1. Field of the Invention

The present invention relates to a torsion beam type rear suspension.

### 2. Description of the Related Art

A torsion beam type suspension has a structure which comprises a torsion beam extending in a width or lateral direction of a vehicle body, and a pair of right and left arms each extending in a frontward/rearward or longitudinal direction of the vehicle body, wherein the torsion beam has opposite ends each connected to a longitudinally central portion of a corresponding one of the arms. This torsion beam type suspension is widely employed as a rear suspension for FF (front engine/front-wheel drive) compact vehicles. Generally, in the torsion beam type rear suspension employed in such FF compact vehicles, each of the arms is designed as a so-called trailing arm having a front end connected to a vehicle body and a rear end mounting a rear wheel, as disclosed in the Japanese Patent Laid-Open Publication No. 2001-321846. Further, in the trailing arm type rear suspension, a coil spring is assembled therewith.

DE 103 36 800 A1 describes a torsion beam axle for automotive vehicle comprising a pair of trailing arms being pivotable connectable with a vehicle body and a torsion profile open on a lower side thereof.

FR 2 819 754 discloses a torsion beam axle comprising a pair of trailing arms and a torsion profile open on a lower side thereof. A spring seat is connected in a corner between the end of the torsion profile and a front portion of the trailing arm.

FR 2 793 736 describes a torsion beam axle comprising a pair of trailing arms and a torsion profile. A spring seat is connected in a corner between the end of the torsion profile and a front portion of the trailing arm.

US 5 813 691 describes a twist beam type suspension having a rigid twist beam, wherein opposite ends of the twist beam are connected respective trailing arms.

### SUMMARY OF THE INVENTION

It is the object of the invention to provide a suspension for vehicle having an improved rigidity, a light-weight construction and which can be manufactured with low costs.

This object is fulfilled by a suspension structure having the features disclosed in claim 1. Preferred embodiments are defined in the dependent claims.

In order to achieve the above object, according a first aspect of the present invention, there is provided a torsion beam type rear suspension comprising: a pair of right and left trailing arms each of which extends in a longitudinal direction of a vehicle body and has a longitudinally front end supported relative to the vehicle body in a vertically swingable manner and a longitudinally rear end rotatably supporting a rear wheel; a torsion beam formed from a hollow pipe to have a closed and deformed section and designed to extend in a lateral direction of the vehicle body and have opposed lateral ends each connected to a longitudinally central portion of a corresponding one of the trailing arms; a spring seat disposed in a corner region defined at a junction between each of the lateral ends of the torsion beam and a rear portion of a corresponding one of the trailing arms to form a coil spring mounting seat; and a vertical flange formed on a laterally inward side of the spring seat to have a longitudinally front edge extending vertically along a rear side surface of the torsion beam. The spring seat has a first region of disposed opposed to the corresponding trailing arm and fixed thereto approximately in its entirety, i.e. the first region extends along the corresponding trailing arm and is fixed threreto approximately over the entire range thereof. Further, a second region is disposed opposed to the torsion beam and fixed thereto only through the vertical flange.

As above, the torsion beam type rear suspension set forth in the first aspect of the present invention employs a structure where the vertically-extending vertical flange is formed on the laterally inward side of the spring seat or at a position spaced apart from the corresponding trailing arm in the laterally inward direction, and the torsion beam and the spring seat are fixed together only through the vertical flange. In other words, the remaining part of the second region disposed opposed to the torsion beam is unfixed relative to the torsion beam.

This structure makes it possible to fix the spring seat to not only the trailing arm but also the torsion beam. Thus, the supporting rigidity of the spring seat relative to a coil spring can be enhanced without increasing the rigidity of the spring seat and/or the trailing arm. Further, in the second region of the spring seat disposed opposed to the torsion beam, only the vertical flange extending vertically across the torsion beam is fixed to the torsion beam, but the remaining part of the second region is unfixed relative to the torsion beam. This makes it possible to reduce the risk of stress concentration occurring in the torsion beam.

These and other objects, features and advantages of the invention will become more apparent upon reading the following detailed description along with the accompanying drawings.

### BRIEF DESCRIPTION OF THE DRAWINGS

FIG. 1 is a fragmentary top plan view showing a right portion of a torsion beam type rear suspension according to one embodiment of the present invention.
FIG 2 is a back view of the torsion beam type rear suspension in FIG 1.
FIG 3 is a perspective view showing the torsion beam type rear suspension in FIG. 1, viewed from a laterally inward side to a laterally outward side of a vehicle body.
FIG 4 is a perspective view showing the torsion beam type rear suspension in FIG 1, viewed from a laterally inward side to a laterally outward side of a vehicle body.
FIG. 5 is an explanatory fragmentary top plan view showing the torsion beam type rear suspension in FIG 1.

### DETAILED DESCRIPTION OF THE PREFERRED EMBODIMENTS OF THE INVENTION

With reference to the accompanying drawings, an preferred embodiment of the present invention will now be described.

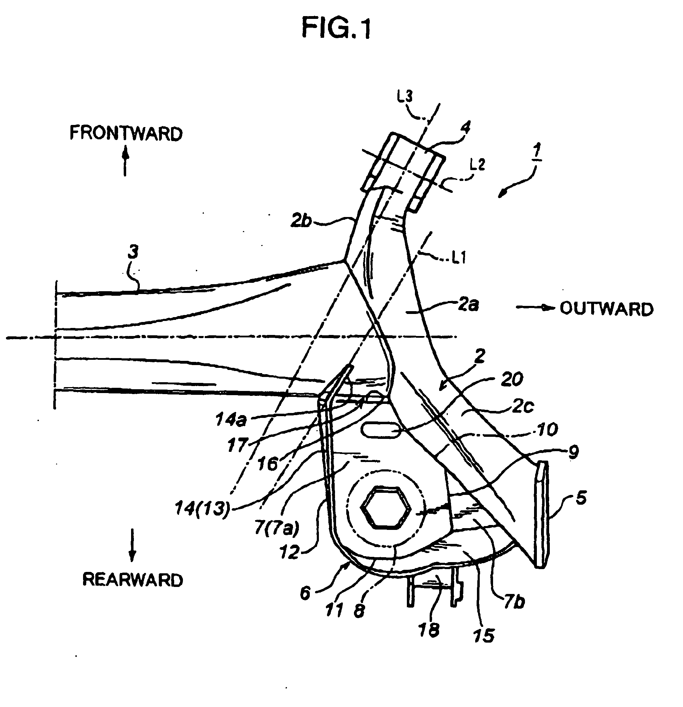

FIG 1 is a fragmentary top plan view showing a right portion of a torsion beam type suspension according to one embodiment of the present invention, which is applied to a rear suspension for a vehicle. The torsion beam type rear suspension 1 comprises a pair of right and left trailing arms 2 disposed to extend in a frontward/rearward or longitudinal direction of a vehicle body, and a torsion beam 3 disposed to extend in a width or lateral direction of the vehicle body. Each of opposed lateral ends of the torsion beam 3 is welded to a longitudinally central portion 2a of a corresponding one of the trailing arms 2 to form a structure where the pair of trailing arms 2 are connected, respectively, to the opposed lateral ends of the torsion beam 3.

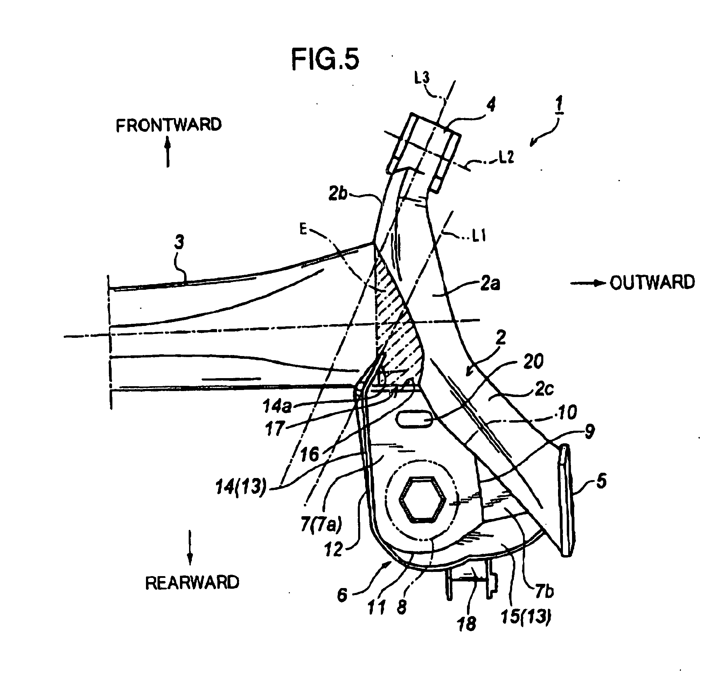

As with the structure disclosed in the Japanese Patent Laid-Open Publication No. 2001-321846, the torsion beam 3 is formed by pressing a hollow pipe to have a closed and deformed section. For example, this deformed section has a U shape with an opening facing downward. The torsion beam 3 is designed such that an area of the opening of the U-shaped section becomes larger at each of the lateral ends thereof, and becomes smaller at a laterally central portion thereof. That is, the torsion beam 3 is formed to have a width which gradually increases in a direction from the laterally central portion to each of the lateral ends in top plan view. Each of the lateral ends of the torsion beam 3 has an inclined edge extending obliquely rearward and laterally outward. That is, the lateral end of the torsion beam 3 is formed with an approximately right triangle-shaped enlarged portion E enlarged to have a longitudinally front end and a longitudinally rear end located laterally outward relative to the longitudinally front end in a top plan view (see FIG. 5). Based on this enlarged portion E, an overlapping area between the lateral end of the torsion beam 3 and the trailing arm 2 is greater at the longitudinally rear end than at the longitudinally front end. That is, the lateral end of the torsion beam 3 is formed to have higher rigidity at the longitudinally rear end than that at the longitudinally front end.

Each of the trailing arms 2 extending in the longitudinal direction of the vehicle body has an eye 4 at a front end thereof. The eye 4 is swingably supported by the vehicle body through a bushing (not shown). Further, the trailing arm 2 has a bracket 5 at a rear end thereof, and a rear wheel is rotatably supported by the trailing arm 2 through the bracket 5.

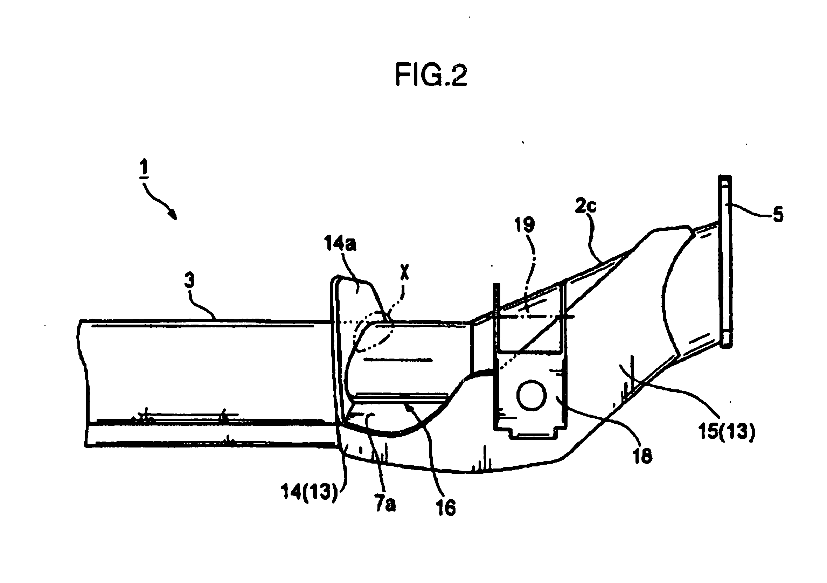

As shown in FIG. 1, the trailing arm 2 has a shape which is concavedly curved laterally outward in top plan view. That is, in top plan view, the trailing arm 2 has a front portion 2b extending from the eye 4 toward the central portion 2a with a laterally inward inclination, the central portion 2a extending toward the longitudinally rear portion with a slight laterally outward inclination, and the rear portion 2c extending from the central portion 2a to the bracket 5 with a large laterally outward inclination. FIG 2 is a back view of a right portion of the torsion beam type suspension 1. As seen in FIG. 2, the trailing arm 2 is formed to extend obliquely upward from the central portion 2a to the bracket 5.

The torsion beam type suspension 1 includes a spring seat 6 disposed in a corner region between each of the lateral ends of the torsion beam 3 and the rear portion 2c of a corresponding one of the trailing arms 2.

The spring seat 6 is formed by subjecting a steel sheet to a press forming process. The spring seat 6 has a bottom wall 7. The torsion beam type rear suspension 1 includes a coil spring 8. The bottom wall 7 has a main bottom wall portion 7a extending approximately horizontally, and a mounting seat for the coil spring 8 is formed in a rear region of the main bottom wall portion 7a.

The bottom wall 7 includes an inclined portion 7b zoned relative to the main bottom wall portion 7a by a bead (bending line) 9, and the inclined portion 7b is disposed opposed to the rear end of the trailing arm 2. Specifically, the bead 9 extends linearly in the longitudinal direction of the vehicle body, and has a front end intersecting with the trailing arm 2 at a longitudinally intermediate position of the rear portion 2c thereof. The inclined portion 7b of the spring seat 6 extends from the bead 9 obliquely upward and laterally outward, and has a laterally outer edge in contact with the trailing arm 2.

As described above, the mounting seat for the coil spring 8 is formed in the rear portion of the bottom wall 7 of the spring seat 6. The rigidity of the rear portion of the bottom wall 7 is substantially increased by the bead 9 and the inclined portion 7b fixed to the trailing arm 2. Thus, the supporting rigidity of the spring seat 6 relative to the coil spring 8 can be ensured without providing an additional reinforcing member.

The spring seat 6 has a laterally outer edge which is welded to the trailing arm 2 in its entirety without forming a flange thereat. Specifically, the laterally outer edge 10 of the spring seat 6 is formed to extend along a side surface of the rear portion 2c of the trailing arm 2, and welded to the trailing arm 2 over the entire range thereof. As above, no flange is formed in this welded region between the spring seat 6 and the trailing arm 2. This can reduce an interference of the spring scat 6 relative to the trailing arm 2.

The spring scat 6 has a vertical flange 13 extending over a longitudinally rear edge 11 and a laterally inner edge 12. Specifically, the vertical flange 13 includes a first flange portion 14 extending longitudinally along the laterally inner edge 12 of the bottom wall 7, and a second flange portion 15 extending laterally along the longitudinally rear edge 11 of the main bottom wall portion 7a and the inclined portion 7b. The first and second flange portions 14, 15 are continued, and formed by bending the spring seat 6 upward. In this manner, a 3-dimensional structure consisting of the first flange portion 14, the second flange portion 15 and the inclined portion 7b is formed around the mounting seat for the coil spring 8 to provide sufficient rigidity to the mounting seat. This makes it possible to support a reaction force of the coil spring 8 by the spring seat 6 itself.

The first flange portion 14 extending longitudinally (in the longitudinal direction of the vehicle body) has a relatively low height. In contrast, the second flange portion 15 formed at the rear end of the spring seat 6 to extend laterally (in the lateral direction of the vehicle body) has a relatively large height. That is, the spring seat 6 is designed to have relatively low rigidity in a region thereof adjacent to the torsion beam 3 and have relatively high rigidity in a region thereof adjacent to the mounting seat for the coil spring 8.

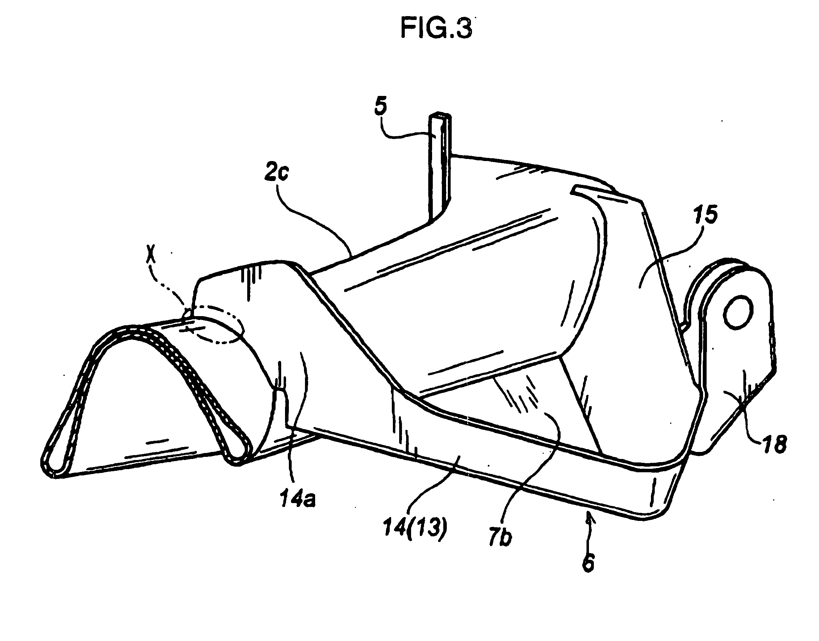

The first flange portion 14 extending longitudinally along the inner edge of the bottom wall 7 is formed to have a relatively low height, and a front end 14a, or a region adjacent to the torsion beam 3, of the first flange portion 14, extends upward and frontward. This front end 14 is formed to have a front edge to be in contact with the torsion beam 3. Specifically, the front end 14a of the first flange 14 has an upper edge enlarged upward, and the front edge of the front end 14a has a curved shape with a cutout in conformity to the rear side surface of the torsion beam 3. Further, the front edge of the first flange portion 14 is fixedly welded to the torsion beam 3 only through an upper region thereof or a region X surrounded by the elliptic two-dot chain line in FIGS. 2 and 3, but a lower region below the region X is not fixed to the torsion beam 3.

The upper region of the front edge of the first flange portion 14 welded to the torsion beam 3 extends obliquely frontward and laterally outward (or extends frontward with a laterally outward inclination). Preferably, this extension direction L1 is in parallel relation to the two-dot chain line L3 (in FIG 1) orthogonal to an axis L2 of the eye 4 of the trailing arm 2 or a swing axis of the trailing arm 3. Further, it is preferable that the front edge of the first flange portion 14 is formed to allow the upper region thereof to be mounted on the upper surface of the torsion beam 3. In this case, the spring seat 6 is fixed to the torsion beam 3 while being hooked onto the torsion beam 3, so as to allow the spring seat 6 to be more reliably supported by the torsion beam 3.

The main bottom wall portion 7a of the spring seat 6 has a front edge 16 formed to have no flange and extend laterally along the torsion beam 3. Preferably, this front edge 16 is disposed slightly spaced apart from the torsion beam 3. In this embodiment, the front edge 16 is disposed to allow an elongated gap 17 extending along the torsion beam 3 to be formed between the front edge 16 and the torsion beam 3.

The vertical flange 13 formed along the inner edge 12 and the rear edge 11 of the spring seat 16 will be described in more detail below. The laterally outer edge of the second flange portion 15 is formed in a curved shape along the side surface of the trailing arm 2, and welded directly to the trailing arm 2 without a flange.

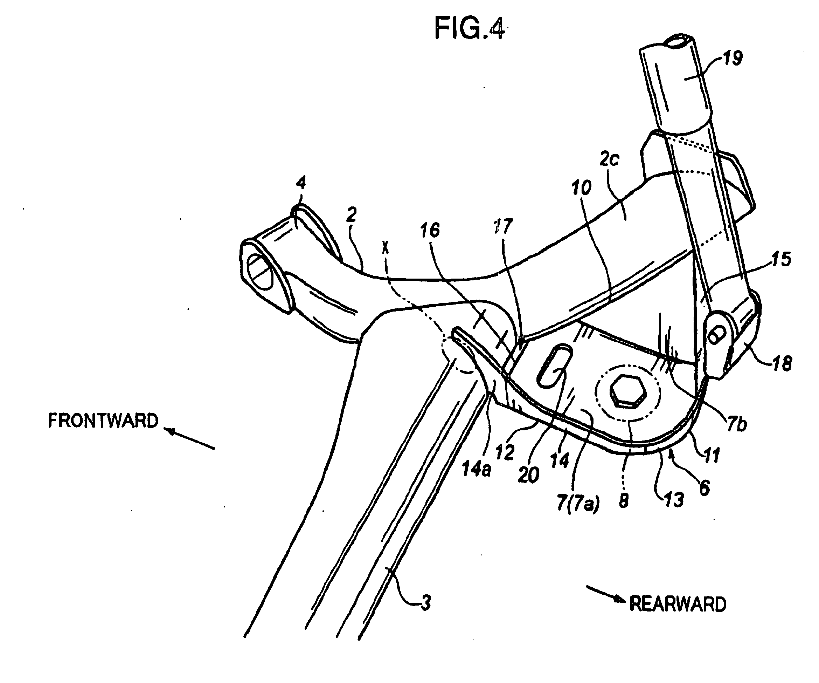

In the figures, the reference numeral 18 indicates a damper mounting bracket. This damper mounting bracket 18 is welded to a rear surface of the second flange portion 15. As shown in FIG 4, a tube type damper 19 is mounted to the damper mounted bracket 18.

In a preferred embodiment of the present invention, an opening 20 is preferably formed in a longitudinally front region of the main bottom wall portion 7a of the spring seat 6 to serve as a means to reduce the rigidity of the longitudinally front region. Further, this opening 20 is preferably formed to extend laterally in approximately parallel relation to the torsion beam 3.

In the rear suspension 1 according to the above embodiment, the spring seat 6 is bent to form the vertical flange 13, and the vertically-extending front edge of the vertical flange 13 is welded to the torsion beam 3 to fix the spring seat 6 to the torsion beam 3. In this manner, the spring seat 6 fixed to not only the trailing arm 2 but also the torsion beam 3 can have enhanced supporting rigidity without the need for designing the trailing arm 2 and /or the spring seat 6 to be a high-rigidity member. Further, even if the spring seat 6 is fixed to the torsion beam 3, the above structure can eliminate an adverse effect on the torsion beam, such as torsional deformation.

In other words, if the front edge of the main bottom wall portion 7a of the spring seat 6 is simply fixed to the torsion beam 3, a movement of the lateral end of the torsion beam 3 is hindered by the spring seat 6 to substantially preclude the lateral end of the torsion beam 3 from fulfilling a suspension function. That is, an original function of the torsion beam suspension 1 comprising the pair of trailing arms 2 and the torsion beam 3 will be spoiled. Moreover, it is likely that a stress concentration occurs in the vicinity of a region of the laterally inner edge where the torsion beam 3 and the spring seat 6 are fixed together. In contrast, according to the above embodiment of the present invention, the front edge of the main bottom wall portion 7a of the spring seat 6 is not fixed to the torsion beam 3. This makes it possible to reduce the stress concentration while ensuring the suspension function.

Particularly, the structure where the upper region of the front edge of the vertical flange 13 to be fixed to the torsion beam 3 is formed to extend obliquely frontward and laterally outward, and the trailing arm 2 is formed in a shape concavedly curved laterally outward, as in the above embodiment, makes it possible to maintain a connection strength between the spring seat 6 and the torsion beam 3 against the swing movement of the trailing arm, and reduce the risk that the movement of the torsion beam 3 is hindered by the movement transmitted from the trailing arm 2 through the spring seat 6.

Further, the structure where the front edge of the main bottom wall portion 7a of the spring seat 6 is formed to have no flange so as to reduce the rigidity of the front portion of the spring seat 6 makes it possible to reduce the risk that the movement of the torsion beam 3 is hindered by the movement transmitted from the trailing arm 2 through the spring seat 6. Additionally, the opening 20 extending laterally may be formed in the front region of the main bottom wall portion 7a to facilitate a deformation in the front portion of the spring seat 6 so as to further increase the above effect.

Furthermore, as in the above embodiment, the 3-dimensional structure consisting of the bead 9, the inclined portion 7b, the first flange portion 14 and the second flange portion 15 may be formed around the mounting seat for the coil spring 8 to increase the rigidity of the mounting seat. Additionally, the second flange portion 15 may be formed to have a height greater than that of the first flange portion 14, and the laterally outer edge of the second flange portion 15 may be fixed to the trailing arm 2. In this case, a reaction force of the damper 19 and the coil spring 8 can be more reliably supported by the rear portion of the spring seat 6. This structure can also suppress the risk that a reaction force of the damper 19 and the coil spring 8 is imposed on the torsion beam 3 as an excessive torsional force through the spring scat 6.

A load from a reaction force of the coil spring 8 is applied from the spring seat 6 to the torsion beam 3 in such a manner as to twist the rear portion of the torsion beam 3 downward. According to the structure where the rigidity of the lateral end of the torsion beam 3 is arranged to be greater at the longitudinally rear end than at the longitudinally front end so as to achieve a favorable balance with the load, as in the above embodiment, the suspension performance of the torsion beam 3 can be ensured.

In sum, according a first aspect of the present invention, there is provided a torsion beam type rear suspension comprising: a pair of right and left trailing arms each of which extends in a longitudinal direction of a vehicle body and has a longitudinally front end supported relative to the vehicle body in a vertically swingable manner and a longitudinally rear end rotatably supporting a rear wheel; a torsion beam formed from a hollow pipe to have a closed and deformed section and designed to extend in a lateral direction of the vehicle body and have opposed lateral ends each connected to a longitudinally central portion of a corresponding one of the trailing arms; a spring seat disposed in a corner region defined at a junction between each of the lateral ends of the torsion beam and a rear portion of a corresponding one of the trailing arms to form a coil spring mounting seat; and a vertical flange formed on a laterally inward side of the spring seat to have a longitudinally front edge extending vertically along a rear side surface of the torsion beam. The spring seat has a first region of disposed opposed to the corresponding trailing arm and fixed thereto approximately in its entirety, and a second region disposed opposed to the torsion beam and fixed thereto only through the vertical flange.

As above, the torsion beam type rear suspension set forth in the first aspect of the present invention employs a structure where the vertically-extending vertical flange is formed on the laterally inward side of the spring seat or at a position spaced apart from the corresponding trailing arm in the laterally inward direction, and the torsion beam and the spring seat are fixed together only through the vertical flange. In other words, the remaining part of the second region disposed opposed to the torsion beam is unfixed relative to the torsion beam.

This structure makes it possible to fix the spring seat to not only the trailing arm but also the torsion beam. Thus, the supporting rigidity of the spring seat relative to a coil spring can be enhanced without increasing the rigidity of the spring seat and/or the trailing arm. Further, in the second region of the spring seat disposed opposed to the torsion beam, only the vertical flange extending vertically across the torsion beam is fixed to the torsion beam, but the remaining part of the second region is unfixed relative to the torsion beam. This makes it possible to reduce the risk of stress concentration occurring in the torsion beam.

In a preferred embodiment of the present invention, the spring seat has a laterally inward portion bent upward to provide the vertical flange. In this case, the vertical flange is formed with a longitudinally front end which has an inclined region extending obliquely frontward and laterally outward, and fixed to the torsion beam only through the inclined region. Preferably, this structure is employed in combination with a trailing arm formed in a shape which is concavedly curved laterally outward in top plan view. This structure makes it possible to reduce an adverse effect of a movement of the trailing arm on the torsion beam through the spring seat.

In a preferred embodiment of the present invention, the vertical flange is formed to allow the longitudinally front edge thereof to extend vertically over the rear side surface of the torsion beam in a contact manner. In this case, the vertical flange is fixed to the torsion beam only through an upper region of the front edge, but a lower region of the front edge of the vertical flange is not fixed to the torsion beam. That is, only the upper region of the vertical flange extending vertically across the torsion beam is fixed to the torsion beam. This makes it possible to reduce a contact area between the spring seat and the torsion beam so as to minimize an interference between the spring seat and the torsion beam. Preferably, the vertical flange is designed to fix the upper region to the torsion beam in such a manner as to be mounted on an upper surface of the torsion beam. In this case, the spring seat is fixed to the torsion beam while being hooked onto the torsion beam, so as to allow the spring seat to be more reliably supported by the torsion beam.

According to a second aspect of the present invention, there is provided a torsion beam type rear suspension comprising: a pair of right and left trailing arms each of which extends in a longitudinal direction of a vehicle body and has a longitudinally front end swingably supported relative to the vehicle body and a longitudinally rear end rotatably supporting a rear wheel; a torsion beam formed from a hollow pipe to have a closed and deformed section, and designed to extend in a lateral direction of the vehicle body and have opposed lateral ends each connected to a longitudinally central portion of a corresponding one of the trailing arms; and a spring seat disposed in a corner region defined at a junction between each of the lateral ends of the torsion beam and a rear portion of a corresponding one of the trailing arms. The spring seat has a bottom wall portion formed to serve as a coil spring mounting seat, and a rear end portion and a laterally inward portion which are bent upward to form a vertical flange. The spring seat has a first region disposed opposed to the corresponding trailing arm and fixed thereto approximately in its entirety, and a second region disposed opposed to the torsion beam and designed such that a remaining part of the second region other than the vertical flange is formed with no flange and unfixed relative to the torsion beam.

As above, in the torsion beam type rear suspension set forth in the second aspect of the present invention, the spring seat is fixed to not only the corresponding trailing arm but also the torsion beam. Thus, the supporting rigidity of the spring seat relative to a coil spring can be enhanced without increasing the rigidity of the spring seat and/or the trailing arm. Further, in the second region of the spring seat disposed opposed to the torsion beam, the remaining part other than the vertical flange is formed with no flange and unfixed relative to the torsion beam. Thus, the front end portion of the spring seat has relatively low rigidity. This makes it possible to reduce an adverse effect caused by fixing the spring seat to the torsion beam, particularly the risk of stress concentration occurring in the torsion beam.

In a preferred embodiment of the present invention, the vertical flange has a longitudinally front edge fixed to the torsion beam. That is, the spring seat is fixed to the torsion beam only through the vertical flange extending vertically across the torsion beam, but the remaining part of the second region opposed to the torsion beam is unfixed relative to the torsion beam.

In a preferred embodiment of the present invention, the vertical flange includes a first flange portion extending in the longitudinal direction of the vehicle body and having the longitudinally front edge fixed to the torsion beam, and a second flange portion formed at a longitudinally rear end of the spring seat to extend in the lateral direction of the vehicle body and fixed to the trailing arm. The second flange portion has a height greater than that of the first flange portion. Thus, the spring seat can have relatively low rigidity on a longitudinally front side thereof to be fixed to the torsion beam. This makes it possible to further reduce the risk of stress concentration in the torsion beam caused by fixing the spring seat to the torsion beam. The above structure is effectively used when the coil spring mounting scat is formed in a rear portion of the spring seat. Specifically, the second flange portion having a relatively large height can provide enhanced rigidity in the vicinity of the coil spring mounting seat.

In a particularly preferred embodiment of the present invention, for the purpose of facilitating a deformation in a longitudinally front portion of the spring seat, the bottom wall portion of the spring seat has a front region which includes a deformation facilitating zone extending approximately parallel to the torsion beam. Preferably, the deformation facilitating zone has an opening formed in the front region of the bottom wall portion to extend in the lateral direction of the vehicle body.

According to a third aspect of the present invention, there is provided a torsion beam type rear suspension comprising: a pair of right and left trailing arms each of which extends in a longitudinal direction of a vehicle body and has a longitudinally front end swingably supported relative to the vehicle body and a longitudinally rear end rotatably supporting a rear wheel; a torsion beam formed from a hollow pipe to have a closed and deformed section, and designed to extend in a lateral direction of the vehicle body and have opposed lateral ends each connected to a longitudinally central portion of a corresponding one of the trailing arms; and a spring seat disposed in a corner region defined at a junction between each of the lateral ends of the torsion beam and a rear portion of a corresponding one of the trailing arms, and fixed to the torsion beam and the corresponding trailing arm. The spring seat is provided with a coil spring mounting seat in a rear portion thereof, and a damper mounting seat at a longitudinally rear end thereof. The spring seat has a first region disposed opposed to the corresponding trailing arm and fixed thereto approximately in its entirety, and a second region disposed opposed to the torsion beam and fixed to the torsion beam only through a laterally inward zone thereof.

As above, in the torsion beam type rear suspension set forth in the third aspect of the present invention, the spring seat is fixed to not only the corresponding trailing arm but also the torsion beam. Thus, the supporting rigidity of the spring seat relative to a coil spring can be enhanced without increasing the rigidity of the spring seat and/or the trailing arm. Further, in the second region of the spring seat disposed opposed to the torsion beam, only the laterally inward zone is fixed to the torsion beam, but a laterally inward zone of the second region is not fixed to the torsion beam. This makes it possible to reduce an adverse effect caused by fixing the spring seat to the torsion beam, or suppress an excessive torsion force to be applied to the lateral end of the torsion beam due to a reaction force of a coil spring and/or a damper acting on the spring seat.

In a preferred embodiment of the present invention, the spring seat has a bead formed between the coil spring mounting seat and the first region opposed to the corresponding trailing arm to extend linearly in the longitudinal direction of the vehicle body. This bead makes it possible to provide enhanced strength in the spring seat without additionally providing a reinforcing member to the spring seat. Particularly, in the third aspect of the present invention, while the damper mounting seat is provided at the longitudinally rear end of the spring seat, the bead allows the spring seat to have rigidity sufficient to receiving a reaction force of a damper and a coil spring acting on the spring seat. Preferably, the laterally inward zone of the spring seat is formed with a first flange approximately parallel to the bead extending in the longitudinal direction of the vehicle body. A combination of the first flange and the bead can provide enhanced rigidity in the coil spring seat located therebetween. Further, the spring seat may include an inclined portion which extends from the bead obliquely upward and laterally outward, to more reliably obtain the above effect. That is, preferably, the spring seat is formed in a 3-dimensionally bent configuration having the above first flange, bead and inclined portion.

More preferably, the spring seat has a longitudinally rear end portion bent to form a second flange extending in the lateral direction of the vehicle body. This second flange may be formed to have a height greater than that of the first flange. This makes it possible to increase the rigidity of the rear portion of the spring seat provided with the coil spring mounting seat and the damper mounting seat while relatively reducing the rigidity of the front portion of the spring scat at low level, so as to reduce the adverse effect caused by fixing the spring seat to the torsion beam. Specifically, an excessive torsion force to be applied to the lateral end of the torsion beam due to a reaction force of an additional suspension component, such as a damper, can be suppressed. In view of achieving the object of the present invention, most preferably, the spring seat is designed to form the first and second flanges in a continuous manner, and fix a front end of the first flange and a laterally outer end of the second flange, respectively, to the torsion beam and the corresponding trailing arm.

According to a fourth aspect of the present invention, there is provided a torsion beam type rear suspension comprising: a pair of right and left trailing arms each of which extends in a longitudinal direction of a vehicle body and has a longitudinally front end swingably supported relative to the vehicle body and a longitudinally rear end rotatably supporting a rear wheel; a torsion beam formed from a hollow pipe to have a closed and deformed section, and designed to extend in a lateral direction of the vehicle body and have opposed lateral ends each connected to a longitudinally central portion of a corresponding one of the trailing arms; and a spring seat disposed in a corner region defined at a junction between each of the lateral ends of the torsion beam and a rear portion of a corresponding one of the trailing arms, and fixed to the torsion beam and the corresponding trailing arm. Each of the lateral ends of the torsion beam includes an enlarged portion enlarged laterally outward to have a longitudinally front end and a longitudinally rear end located laterally outward relative to the longitudinally front end in top plan view, and an overlapping area between the torsion beam and the trailing arm in the enlarged portion is larger at the longitudinally rear end than at the longitudinally front end.

As above, in the torsion beam type rear suspension set forth in the fourth aspect of the present invention, each of the lateral ends of the torsion beam is provided with the enlarged portion, and the enlarged portion is formed such that the longitudinally rear end is located laterally outward relative to the longitudinally front end, and an overlapping area between the enlarged portion and the trailing arm is larger at the longitudinally rear end than at the longitudinally front end. Thus, the rigidity of the lateral end of the torsion beam becomes greater at the longitudinally rear end than at the longitudinally front end.

In a structure where the spring seat is fixed to both the trailing arm and the torsion beam as in the present invention, a load from a reaction force of a coil spring is applied from the spring scat to the torsion beam in such a manner as to twist the longitudinally rear portion of the torsion beam downward. According to the above structure where the rigidity of the lateral end of the torsion beam is arranged to be greater at the longitudinally rear end than at the longitudinally front end, the rigidity of the torsion beam can be adjusted to achieve a favorable balance with the action of twisting the rear portion of the torsion beam downward. Thus, even if the spring seat is fixed additionally to the torsion beam, the suspension performance of the torsion beam can be ensured.

In a preferred embodiment of the present invention, the spring seat is fixed to a longitudinally rear portion of the torsion beam. Further, the spring seat has a region opposed to the torsion beam and formed with a vertical flange extending vertically in a laterally inward zone thereof. The region of the spring seat opposed to the torsion beam is fixed to the torsion beam only through the vertical flange. That is, a remaining part of the region of the spring seat opposed to the torsion beam other than the vertical flange is unfixed relative to the torsion beam. The above structure where the spring seat is fixed to the torsion beam through the vertically-extending vertical flange makes it possible to reduce the risk of stress concentration occurring in the lateral ends of the torsion beam. In other words, while the longitudinally front edge of the spring scat entirely fixed to the torsion beam causes difficulty in torsional deformation of the torsion beam and the risk of stress concentration on the boundary between the lateral end and a central portion of the torsion beam, the above structure where only the front edge of the vertically-extending vertical flange is fixed to the torsion beam can reduce the risk of the stress concentration.

Although the present invention has been described in term of specific exemplary embodiments, it will be appreciated that various changes and modifications may be made by those skilled in the art without departing from the scope of the invention, defined in the following claims.

## Claims

1. A torsion beam type rear suspension comprising:
a pair of right and left trailing arms (2) each of which extends in a longitudinal direction of a vehicle body and has a longitudinally front end supported relative to the vehicle body in a vertically swingable manner and a longitudinally rear end rotatably supporting a rear wheel;
a torsion beam (3) extending in a lateral direction of the vehicle body and having opposed lateral ends each connected to a longitudinally central portion (2a) of a corresponding one of said trailing arms (2);
**characterized by**
a spring seat (6) disposed in a corner region defined at a junction between each of the lateral ends of said torsion beam (3) and a rear portion (2c) of a corresponding one of said trailing arms (2) to form a coil spring (8) mounting seat; and
a vertical flange (13) formed on a laterally inward side of said spring seat to have a longitudinally front edge (14a) extending vertically along a rear side surface of said torsion beam (3),
wherein said torsion beam (3) is formed from a hollow pipe to have a closed and deformed section, and
said spring seat (6) has a first region (10, 7b) extending along said corresponding trailing arm (2) and fixed thereto approximately over the entire range thereof, and a second region (16, 14a) disposed opposed to said torsion beam (3) and fixed thereto only through said vertical flange (13).

2. The torsion beam type rear suspension according to claim 1, **characterized in that** said spring seat (6) has a laterally inward portion bent upward to provide said vertical flange (14), wherein said vertical flange is formed with a longitudinally front end (14a) which has an inclined region extending obliquely frontward and laterally outward, and fixed to said torsion beam (3) only through said inclined region.

3. The torsion beam type rear suspension according to claim 2, **characterized in that** said vertical flange (13) is formed to allow the longitudinally front edge thereof to extend vertically over the rear side surface of said torsion beam in a contact manner, and fixed to said torsion beam only through an upper region of said front edge.

4. A torsion beam type rear suspension according one of the preceding claims, **characterized in that** said vertical flange (13) includes a rear end portion and the coil spring seat (6) has a laterally inward portion, said rear end portion and said laterally inward portion are bent upward.

5. The torsion beam type rear suspension according to claim 4, **characterized in that** said vertical flange (13) has a longitudinally front edge fixed to said torsion beam (3).

6. The torsion beam type rear suspension according to claim 5, **characterized in that** said vertical flange (13) includes a first flange portion (14) extending in the longitudinal direction of the vehicle body and having said longitudinally front edge fixed to said torsion beam, and a second flange portion (15) formed at a longitudinally rear end of said spring seat (6) to extend in the lateral direction of the vehicle body and fixed to said trailing arm, wherein said second flange portion (15) has a height greater than that of said first flange portion (14).

7. The torsion beam type rear suspension according to claim 6, **characterized in that** said bottom wall portion (7) of said spring seat (6) has a front region which includes a deformation facilitating zone (20) extending approximately parallel to said torsion beam (3).

8. The torsion beam type rear suspension according to claim 7, **characterized in that** said deformation facilitating zone has an opening (20) formed in said bottom wall portion (7) to extend approximately parallel to said torsion beam (3).

9. A torsion beam type rear suspension according to one of the preceding claims, further comprising a damper mounting seat (18) provided at a longitudinally rear end of the spring seat (6).

10. The torsion beam type rear suspension according to claim 9, **characterized in that** said spring seat (6) has a bead (9) formed between said coil spring mounting seat and said first region (7b) to extend linearly in the longitudinal direction of the vehicle body.

11. The torsion beam type rear suspension according to claim 10, **characterized in that** the laterally inward zone of said spring seat (6) is bent to form a first flange (14) extending in the longitudinal direction of the vehicle body and in approximately parallel relation to said bead (9).

12. The torsion beam type rear suspension according to claim 10 or 11, **characterized in that** said spring seat (6) includes an inclined portion (7b) which extends from said bead (9) obliquely upward and laterally outward and has a laterally outer edge (10) fixed to said corresponding trailing arm (2).

13. The torsion beam type rear suspension according to claim 10, 11 or 12, **characterized in that** said spring seat (6) has a longitudinally rear end portion bent to form a second flange (15) extending in the lateral direction of the vehicle body and having a height greater than that of said first flange (14).

14. A torsion beam type rear suspension according to one of the preceding claims, **characterized in that** each of said lateral ends of said torsion beam includes an enlarged portion (E) enlarged laterally outward to have a longitudinally front end and a longitudinally rear end located laterally outward relative to said longitudinally front end in top plan view; and an overlapping area between said torsion beam (3) and said trailing arm (2) in said enlarged portion is larger at said longitudinally rear end than at said longitudinally front end.

15. The torsion beam type rear suspension according to claim 14, **characterized in that** said spring seat (6) is fixed to a longitudinally rear portion of said torsion beam (3).

16. The torsion beam type rear suspension according to claim 15, **characterized in that** said spring seat (6) has a region (16, 14a) opposed to said torsion beam and formed with a vertical flange (14) extending vertically in a laterally inward zone thereof, said region opposed to said torsion beam (3) being fixed to said torsion beam only through said vertical flange.

## Patentansprüche

1. Torsionsträgerhinterradaufhängung umfassend:
ein Paar von rechten und linken Längslenkern (2), von denen sich jeder in eine Längsrichtung einer Fahrzeugkarosserie erstreckt und ein in Längsrichtung vorderes Ende, welches relativ zu der Fahrzeugkarosserie in einer vertikalen schwenkbaren Art bzw. Weise gelagert bzw. gestützt ist, und ein in Längsrichtung hinteres Ende, welches drehbar ein Hinterrad lagert bzw. stützt, aufweist;
einen Torsionsträger (3), welcher sich in eine laterale Richtung der Fahrzeugka rosserie erstreckt und gegenüberliegende bzw. entgegengesetzte laterale Enden aufweist, von denen jedes mit einem in Längsrichtung zentralen Abschnitt (2a) eines entsprechenden der Längslenker (2) verbunden ist;
**gekennzeichnet durch**
eine Federaufnahme bzw. -auflage (6), welche in einem Eckbereich angeordnet bzw. angelegt ist, welche an einer Kontaktstelle bzw. -verbindung zwischen jedem der lateralen Enden des Torsionsträgers (3) und einem hinteren Abschnitt (2c) eines entsprechenden der Längslenker (2) definiert ist, um ein Spiralfedermontageauflager (8) zu bilden; und
einen vertikalen Flansch (13), welcher an einer lateralen inneren Seite der Federaufnahme gebildet ist, um eine(n) in Längsrichtung vordere(n) Kante bzw. Rand (14a) aufzuweisen, welche(r) sich vertikal entlang einer hinteren Seitenfläche bzw. -oberfläche des Torsionsträgers (3) erstreckt,
wobei der Torsionsträger (3) aus einem hohlen Rohr gebildet ist, um eine geschlossene und deformierte Sektion aufzuweisen, und
die Federaufnahme (6) eine erste Region (10, 7b), welche sich entlang des entsprechenden Längslenkers (2) erstreckt und daran annähernd über die gesamte Ausdehnung bzw. Reichweite hiervon fixiert ist, und eine zweite Region (16, 14a), welche entgegengesetzt bzw. gegenüberliegend zu dem Torsionsträger (3) angeordnet bzw. angelegt ist und daran nur **durch** den vertikalen Flansch (13) fixiert ist, aufweist.

2. Torsionsträgerhinterradaufhängung gemäß Anspruch 1, **dadurch gekennzeichnet, daß** die Federaufnahme (6) einen lateralen Innenabschnitt aufweist, welcher aufwärts gebogen ist, um den vertikalen Flansch (14) bereitzustellen, wobei der vertikale Flansch mit einem in Längsrichtung vorderen Ende (14a) gebildet ist, welches eine geneigte Region aufweist, welche sich schräg nach vorn und lateral nach außen erstreckt, und an dem Torsionsträger (3) nur durch die geneigte Region fixiert ist.

3. Torsionsträgerhinterradaufhängung gemäß Anspruch 2, **dadurch gekennzeichnet, daß** der vertikale Flansch (13) gebildet ist, um der in Längsrichtung vorderen Kante bzw. Rand hiervon zu erlauben, sich vertikal über die hintere Seitenfläche bzw. -oberfläche des Torsionsträgers in einer Kontaktart bzw. kontaktierenden Weise zu erstrecken, und an dem Torsionsträger nur durch eine höhere Region der vorderen Kante bzw. Rand fixiert ist.

4. Torsionsträgerhinterradaufhängung gemäß einem der vorangegangenen Ansprüche, **dadurch gekennzeichnet, daß** der vertikale Flansch (13) einen hinteren Endeabschnitt beinhaltet und das Spiralfederauflager (6) einen lateralen inneren Abschnitt aufweist, wobei der hintere Endeabschnitt und der laterale innere Abschnitt aufwärts gebogen sind.

5. Torsionsträgerhinterradaufhängung gemäß Anspruch 4, **dadurch gekennzeichnet, daß** der vertikale Flansch (13) eine in Längsrichtung vordere Kante bzw. Rand aufweist, welcher an dem Torsionsträger (3) fixiert ist.

6. Torsionsträgerhinterradaufhängung gemäß Anspruch 5, **dadurch gekennzeichnet, daß** der vertikale Flansch (13) einen ersten Flanschabschnitt (14), welcher sich in Längsrichtung der Fahrzeugkarosserie erstreckt und die in Längsrichtung vordere Kante bzw. Rand aufweist, welche an den Torsionsträger fixiert ist, und einen zweiten Flanschabschnitt (15) beinhaltet, welcher an einem in Längsrichtung hinteren Ende der Federaufnahme (6) gebildet ist, um sich in laterale Richtung der Fahrzeugkarosserie zu erstrecken und an dem Längslenker fixiert ist, wobei der zweite Flanschabschnitt (15) eine Höhe größer als die des ersten Flanschabschnitts (14) aufweist.

7. Torsionsträgerhinterradaufhängung gemäß Anspruch 6, **dadurch gekennzeichnet, daß** der Bodenwandschnitt (7) der Federaufnahme (6) eine vordere Region aufweist, welche ein(e) deformationserleichternde(s) Zone bzw. Gebiet (20) beinhaltet, welches sich annähernd parallel zu dem Torsionsträger (3) erstreckt.

8. Torsionsträgerhinterradaufhängung gemäß Anspruch 7, **dadurch gekennzeichnet, daß** die deformationserleichternde Zone eine Öffnung (20) aufweist, welche in dem Bodenwandabschnitt (7) gebildet ist, um sich annähernd parallel zu dem Torsionsträger (3) zu erstrecken.

9. Torsionsträgerhinterradaufhängung gemäß einem der vorangegangenen Ansprüche, weiters umfassend ein Dämpfermontageauflager (18), welches an einem in Längsrichtung hinteren Ende der Federaufnahme (6) bereitgestellt ist.

10. Torsionsträgerhinterradaufhängung gemäß Anspruch 9, **dadurch gekennzeichnet, daß** die Federaufnahme (6) eine Rippe bzw. Leiste (9) aufweist, welche zwischen dem Spiralfedermontageauflager und der ersten Region (7b) gebildet ist, um sich linear in Längsrichtung der Fahrzeugkarosserie zu erstrecken.

11. Torsionsträgerhinterradaufhängung gemäß Anspruch 10, **dadurch gekennzeichnet, daß** die laterale innere Zone der Federaufnahme (6) gebogen ist, um einen ersten Flansch (14), welcher sich in Längsrichtung der Fahrzeugkarosserie und in annähernd paralleler Relation zu der Rippe (9) erstreckt, zu bilden.

12. Torsionsträgerhinterradaufhängung gemäß Anspruch 10 oder 11, **dadurch gekennzeichnet, daß** die Federaufnahme (6) einen geneigten Abschnitt (7b) beinhaltet, welcher sich von der Rippe (9) schräg aufwärts und lateral nach außen erstreckt und eine(n) lateral(e) äußere(n) Kante bzw. Rand (10) aufweist, welche(r) an dem entsprechenden Längslenker (2) fixiert ist.

13. Torsionsträgerhinterradaufhängung gemäß Anspruch 10, 11 oder 12, **dadurch gekennzeichnet, daß** die Federaufnahme (6) einen in Längsrichtung hinteren Endeabschnitt aufweist, welcher gebogen ist, um einen zweiten Flansch (15) zu bilden, welcher sich in lateraler Richtung der Fahrzeugkarosserie erstreckt und eine Höhe, die größer als die des ersten Flansches (14) ist, aufweist.

14. Torsionsträgerhinterradaufhängung gemäß einem der vorangegangenen Ansprüche, **dadurch gekennzeichnet, daß** jedes der lateralen Enden des Torsionsträgers einen erweiterten bzw. ausgeweiteten Abschnitt (E) beinhaltet, welcher lateral nach außen erweitert bzw. ausgeweitet ist, um ein in Längsrichtung vorderes Ende und ein in Längsrichtung hinteres Ende aufzuweisen, welches lateral nach außen relativ zu dem in Längsrichtung vorderen Ende in einer Draufsicht positioniert ist, und ein überlagerndes bzw. überdeckendes Areal zwischen dem Torsionsträger (3) und dem Längslenker (2) in dem erweiterten bzw. ausgeweiteten Teilbereich an dem in Längsrichtung hinteren Ende größer ist als an dem in Längsrichtung vorderen Ende.

15. Torsionsträgerhinterradaufhängung gemäß Anspruch 14, **dadurch gekennzeichnet, daß** die Federaufnahme (6) an einem in Längsrichtung hinteren Abschnitt des Torsionsträgers (3) fixiert ist.

16. Torsionsträgerhinterradaufhängung gemäß Anspruch 15, **dadurch gekennzeichnet, daß** die Federaufnahme (6) eine Region (16, 14a) entgegengesetzt bzw. gegenüberliegend zu dem Torsionsträger aufweist und mit einem vertikalen Flansch (14) gebildet ist, welcher sich vertikal in eine laterale innere Zone hiervon erstreckt,
wobei die Region entgegengesetzt bzw. gegenüberliegend zu dem Torsionsträger (3) an dem Torsionsträger nur durch den vertikalen Flansch fixiert ist.

## Revendications

1. Suspension arrière du type à traverse déformable en torsion, comprenant :
une paire de bras porteurs à droite et à gauche (2) dont chacun d'entre eux s'étend dans une direction longitudinale d'une carrosserie de véhicule automobile et a une extrémité avant en sens longitudinal qui est soutenue par rapport à la carrosserie du véhicule automobile d'une manière pivotante à la verticale et a une extrémité arrière en sens longitudinal qui soutient une roue arrière en rotation ;
une traverse déformable en torsion (3) qui s'étend dans une direction latérale de la carrosserie du véhicule automobile et qui a des extrémités latérales opposées dont chacune est reliée à une partie centrale en sens longitudinal (2a) d'un bras correspondant parmi lesdits bras porteurs (2) ;
**caractérisée par**
un logement de ressort (6) agencé dans une région d'angle définie à une jonction entre chacune des extrémités latérales de ladite traverse déformable en torsion (3) et une partie arrière (2c) d'un bras correspondant parmi lesdits bras porteurs (2) afin de former un logement de montage avec ressort à boudin (8) ;
une bride verticale (13) formée sur un côté intérieur en sens latéral dudit logement de ressort de manière à avoir une arête avant en sens longitudinal (14a) qui s'étend à la verticale le long d'une surface latérale arrière de ladite traverse déformable en torsion (3),
dans laquelle ladite traverse déformable en torsion (3) est formée à partir d'une conduite creuse de manière à avoir une section fermée et déformée, et
dans laquelle ledit logement de ressort (6) a une première région (10, 7b) qui s'étend le long dudit bras porteur correspondant (2) et qui est fixée sur celui-ci approximativement sur toute la portée de celui-ci, et une seconde région (16, 14a) agencée à l'opposé de ladite traverse déformable en torsion (3) et fixée sur celle-ci seulement par l'intermédiaire de ladite bride verticale (13).

2. Suspension arrière du type à traverse déformable en torsion conformément à la revendication 1, **caractérisée en ce que** ledit logement de ressort (6) a une partie intérieure en sens latéral courbée vers le haut afin de fournir ladite bride verticale (14), dans laquelle ladite bride verticale est formée avec une extrémité avant (14a) en sens longitudinal qui a une région inclinée s'étendant vers l'avant à l'oblique et vers l'extérieur en sens latéral, et qui est fixée sur ladite traverse déformable en torsion (3) seulement par l'intermédiaire de ladite région inclinée.

3. Suspension arrière du type à traverse déformable en torsion conformément à la revendication 2, **caractérisée en ce que** ladite bride verticale (13) est formée de manière à permettre à l'arête avant en sens longitudinal de celle-ci de s'étendre à la verticale sur la surface latérale arrière de ladite traverse déformable en torsion d'une manière par contact et est fixée sur ladite traverse déformable en torsion seulement par l'intermédiaire d'une région supérieure de ladite arête avant.

4. Suspension arrière du type à traverse déformable en torsion conformément à l'une quelconque des revendications précédentes, **caractérisée en ce que** ladite bride verticale (13) inclut une partie terminale arrière et **en ce que** le logement de ressort à boudin (6) a une partie intérieure en sens latéral, et **en ce que** ladite partie terminale arrière et ladite partie intérieure en sens latéral sont courbées vers le haut.

5. Suspension arrière du type à traverse déformable en torsion conformément à la revendication 4, **caractérisée en ce que** ladite bride verticale (13) a une arête avant en sens longitudinal qui est fixée sur ladite traverse déformable en torsion (3).

6. Suspension arrière du type à traverse déformable en torsion conformément à la revendication 5, **caractérisée en ce que** ladite bride verticale (13) inclut une première partie de bride (14) qui s'étend dans la direction longitudinale de la carrosserie du véhicule automobile et qui a ladite arête avant en sens longitudinal fixée à ladite traverse déformable en torsion, et une seconde partie de bride (15) formée sur une extrémité arrière en sens longitudinal dudit logement de ressort (6) de manière à s'étendre dans la direction latérale de la carrosserie du véhicule automobile et qui est fixée sur ledit bras porteur, dans laquelle ladite seconde partie de bride (15) a une hauteur plus grande que celle de ladite première partie de bride (14).

7. Suspension arrière du type à traverse déformable en torsion conformément à la revendication 6, **caractérisée en ce que** ladite partie de paroi de fond (7) dudit logement de ressort (6) a une région avant qui inclut une zone facilitant la déformation (20), laquelle s'étend approximativement en parallèle à la dite traverse déformable en torsion (3).

8. Suspension arrière du type à traverse déformable en torsion conformément à la revendication 7, **caractérisée en ce que** ladite zone facilitant la déformation a une ouverture (20) formée dans ladite partie de paroi de fond (7) de manière à s'étendre approximativement en parallèle à la dite traverse déformable en torsion (3).

9. Suspension arrière du type à traverse déformable en torsion conformément à l'une quelconque des revendications précédentes, comprenant en outre un logement de montage d'amortisseur (18) prévu sur une extrémité arrière en sens longitudinal dudit logement de ressort (6).

10. Suspension arrière du type à traverse déformable en torsion conformément à la revendication 9, **caractérisée en ce que** ledit logement de ressort (6) a une nervure de renforcement (9) formée entre, ledit logement de montage avec ressort à boudin et ladite première région (7b) de manière à s'étendre linéairement dans la direction longitudinale de la carrosserie du véhicule automobile.

11. Suspension arrière du type à traverse déformable en torsion conformément à la revendication 10, **caractérisée en ce que** la zone intérieure en sens latéral dudit logement de ressort (6) est courbée de manière à former une première bride (14) qui s'étend dans la direction longitudinale de la carrosserie du véhicule automobile et qui est approximativement en relation parallèle par rapport à ladite nervure de renforcement (9).

12. Suspension arrière du type à traverse déformable en torsion conformément à l'une ou l'autre des revendications 10 et 11, **caractérisée en ce que** ledit logement de ressort (6) inclut une partie inclinée (7b) qui s'étend depuis ladite nervure de renforcement (9) vers le haut à l'oblique et vers l'extérieur en sens latéral et qui a une arête extérieure en sens latéral (10) qui est fixée audit bras porteur correspondant (2).

13. Suspension arrière du type à traverse déformable en torsion conformément à l'une des revendications 10, 11 ou 12, **caractérisée en ce que** ledit logement de ressort (6) a une partie terminale arrière en sens longitudinal, laquelle est courbée de manière à former une seconde bride (15) qui s'étend dans la direction latérale de la carrosserie du véhicule automobile et qui a une hauteur plus grande que celle de ladite première bride (14).

14. Suspension arrière du type à traverse déformable en torsion conformément à l'une quelconque des revendications précédentes, **caractérisée en ce que** chacune desdites extrémités latérales de ladite traverse déformable en torsion inclut une partie élargie (E) qui est élargie vers l'extérieur en sens latéral de manière à avoir une extrémité avant en sens longitudinal et une extrémité arrière en sens longitudinal placée vers l'extérieur en sens latéral par rapport à ladite extrémité avant en sens longitudinal dans la vue en plan, et **en ce qu'**une zone de chevauchement entre ladite traverse déformable en torsion (3) et ledit bras porteur (2) dans ladite partie élargie est plus grande sur ladite extrémité arrière en sens longitudinal que sur ladite extrémité avant en sens longitudinal.

15. Suspension arrière du type à traverse déformable en torsion conformément à la revendication 14, **caractérisée en ce que** ledit logement de ressort (6) est fixé sur une partie arrière en sens longitudinal de ladite traverse déformable en torsion (3).

16. Suspension arrière du type à traverse déformable en torsion conformément à la revendication 15, **caractérisée en ce que** ledit logement de ressort (6) a une région (16, 14a) qui est opposée à ladite traverse déformable en torsion et qui est formée avec une bride verticale (14) qui s'étend à la verticale dans une zone intérieure en sens latéral de celle-ci, ladite région opposée à ladite traverse déformable en torsion (3) étant fixée sur ladite traverse déformable en torsion seulement par l'intermédiaire de ladite bride verticale.
